# DEMANDE DE BREVET EUROPEEN

(11) **EP 0 996 185 A1**
(43) Date de publication de la demande: **26.04.2000**
(21) Numéro de dépôt: 99402452.9
(22) Date de dépôt: 07.10.1999
(51) Int. Cl.: H01M 4/86, H01M 4/96

(54) **Electrode à air bifonctionnelle pour générateur électrochimique secondaire**

(30) Priorité: 22.10.1998 FR 9813246
(71) Demandeur: ALCATEL, 75008 Paris (FR)
(72) Inventeur: Desprez, Philippe, 33290 Blanquefort (FR); Bouet, Jacques, 75015 Paris (FR); Chouquais, Frédéric, 33600 Pessac (FR); Gillot, Stéphane, Résidence Le Parc, 33520 Bruges (FR)
(74) Mandataire: Laroche, Danièle

(57) **Abrégé**

La présente invention a pour objet une électrode à air bifonctionnelle comprenant un collecteur de courant (3) et une couche active poreuse contenant un liant et une poudre d'un matériau carboné de structure graphite, caractérisée en ce que ladite poudre est constituée de particules (6) dont la taille moyenne est supérieure au diamètre moyen des pores de ladite couche active, ledit diamètre étant compris entre 1µm et 10µm.

## Description

La présente invention concerne une électrode à air bifonctionnelle pour générateur électrochimique secondaire. Une telle électrode est plus particulièrement destinée à être utilisée dans un générateur électrochimique secondaire Métal-Air à électrolyte aqueux alcalin. L'invention s'étend en outre au procédé de fabrication de cette électrode et aux générateurs électrochimiques la contenant.

Les générateurs électrochimiques secondaire Métal-Air utilise l'oxygène de l'air comme réactant dans la réaction électrochimique de décharge de l'électrode positive à air. L'électrode à air est dite bifonctionnelle ou réversible si elle fonctionne en charge comme en décharge. En décharge l'oxygène de l'air est réduit, et lors de la recharge l'oxygène est régénéré par l'oxydation de l'électrolyte sur l'électrode positive. La courte durée de vie des accumulateurs Métal-Air a pour origine le vieillissement prématuré de l'électrode à air.

L'électrode à air comprend habituellement un mélange d'un matériau carboné pulvérulent et d'un liant supporté par un collecteur de courant. Le matériau carboné sert fréquemment de support à des catalyseurs d'oxydation et de réduction de l'oxygène. Un bon fonctionnement de l'électrode à air est obtenue par l'équilibre entre les zones hydrophiles mouillées par l'électrolyte et les zones hydrophobes pour l'accès du gaz. L'emploi d'un liant hydrophobe, comme le polytétrafluoroéthylène (PTFE) permet d'atteindre cet équilibre.

Au fur et à mesure du cyclage, l'électrode positive se détériore principalement sous l'effet de la recharge qui provoque la corrosion par oxydation du matériau carboné et des catalyseurs. Cette oxydation conduit également à la carbonatation de l'électrolyte alcalin. Une évaluation de la durée de vie des électrodes à air bifonctionnelles est donc donnée par la mesure du nombre total d'ampère-heure chargé par unité de surface (Ah/cm2) des électrodes avant d'observer la dégradation des propriétés de l'électrode à air.

Les travaux d'optimisation de l'électrode à air portent donc notamment sur la recherche de carbones plus résistant à l'oxydation afin de prolonger la durée de vie du générateur.

L'article de KARPINSKI et al. (Power Sources Conf., 1998) décrit une électrode à air bifonctionnelle améliorée comprenant un collecteur de courant et une couche active contenant un noir d'acétylène de référence "SHAWINIGAN".

Un générateur zinc-air contenant cette électrode est cyclée dans les conditions suivantes : charge de 2 heures à 11mA/cm², suivie d'une décharge d'une heure à 20mA/cm². Il est capable d'effectuer plus de 100 cycles à température ambiante (22°C), soit de résister à une oxydation d'au moins 2,3Ah/cm².

L'article de Müller et al. (Electrochim. Acta, 39(11/12), 1994) décrit une électrode à air bifonctionnelle comprenant un collecteur de courant, une couche de diffusion et une couche active. La couche active est poreuse et le diamètre moyen des pores est de 0,05µm. L'électrode contient un matériau carboné de référence "VULCAN XC-72" graphitisé ayant des particules dont la taille est inférieure à 125µm.

Un générateur zinc-air contenant cette électrode est cyclée dans les conditions suivantes : charge à 10mA/cm² pendant 5 heures, suivie d'une décharge à 10mA/cm² pendant 3 heures. Il est capable d'effectuer jusqu'à 120-130 cycles à température ambiante (23±2°C), soit de résister à une capcité totale chargée de 6-6,5Ah/cm². La polarisation de l'électrode après 134 cycles suggère que les catalyseurs sont détruits et que le mouillage de l'électrode diminue sa surface active.

La présente invention a pour but de proposer un générateur électrochimique rechargeable Métal-Air comprenant une électrode positive dont la durée de vie plus longue que celle des électrodes connues.

L'invention a également pour but de proposer une électrode à air bifonctionnelle qui possèdent une résistance accrue au vieillissement.

L'objet de la présente invention est une électrode à air bifonctionnelle comprenant un collecteur de courant et une couche active poreuse contenant un liant et une poudre d'un matériau carboné de structure graphite, caractérisée en ce que ladite poudre est constituée de particules dont la taille moyenne est supérieure au diamètre moyen des pores de ladite couche active, ledit diamètre étant compris entre 1µm et 10µm.

On a découvert de manière surprenante que si la caractéristique essentielle de l'invention est respectée, une électrode contenant ce matériau présente un comportement amélioré.

De préférence le matériau carboné graphité est choisi parmi un graphite naturel, un graphite synthétique, un noir de carbone graphitisé et un noir d'acétylène.

De préférence encore le matériau carboné graphité a une surface comprise entre 10m²/g et 300m²/g.

Avantageusement le liant est un liant hydrophobe, de préférence le polytétrafluoroéthylène (PTFE) permettant d'obtenir une structure poreuse tridimensionnelle. Une charge de PTFE sous forme de billes ou de géllules de dimension inférieure à la taille moyenne des particules peut être ajoutée dans la couche active afin d'augmenter la surface active de l'électrode en améliorant la qualité de l'interface hydrophile/hydrophobe.

Selon une forme d'exécution, l'électrode peut contenir en outre un catalyseur de réduction de l'oxygène, par exemple de structure cobaltite ou perovskite. Ce catalyseur contribue à réduire les surtensions de réduction et de dégagement de l'oxygène, et ainsi à améliorer le rendement de l'électrode.

Selon une autre forme d'exécution, l'électrode peut contenir en outre un catalyseur d'oxydation de l'électrolyte, par exemple de structure cobaltite ou perovskite ou encore de type métallique de très grande surface développée. Le collecteur de courant peut contenir en surface un tel catalyseur d'oxydation de l'électrolyte. Ce catalyseur permet d'augmenter la durée de vie de l'électrode.

Selon une première variante le collecteur de courant est une structure conductrice tridimensionnelle choisie parmi une mousse et un feutre.

Selon une deuxième variante le collecteur de courant est une structure conductrice bidimensionnelle choisie parmi un feuillard plein, un feuillard perforé, un métal déployé, une grille et un tissu.

Selon un autre mode de réalisation l'électrode comprend en outre une couche de diffusion qui est une membrane hydrophobe disposée sur l'électrode du côté opposé à l'électrolyte. Cette membrane doit posséder une perméation gazeuse supérieure à la consommation en oxygène de l'électrode. Elle contribue à accroître la résistance au noyage de l'électrode.

L'électrode selon la présente invention a comme avantage d'associer une bonne résistance à l'oxydation à une tenue mécanique capable de résister à la contrainte exercée par le dégagement gazeux et de maintenir la percolation électronique.

L'invention a aussi pour objet un procédé de fabrication d'une électrode à air bifonctionnelle comportant les étapes suivantes :
- on mélange ledit liant, ladite matière active et un solvant volatil pour obtenir ladite pâte,
- on dépose ladite pâte sur ledit collecteur pour former une électrode,
- à température ambiante, on sèche et on comprime ladite électrode.

D'autres caractéristiques et avantages de la présente invention apparaîtront au cours des exemples suivants de réalisation, donnés bien entendu à titre illustratif et non limitatif, et dans le dessin annexé sur lequel :
- la figure 1 est une coupe schématique partielle de l'électrode selon l'invention,
- la figure 2 représente l'évolution du potentiel au cours du cyclage à un régime de 30mA/cm² d'une électrode selon l'invention et d'une électrode comparative,
- la figure 3 représente l'évolution du potentiel au cours du cyclage à un régime de 10mA/cm² d'une électrode selon l'invention.

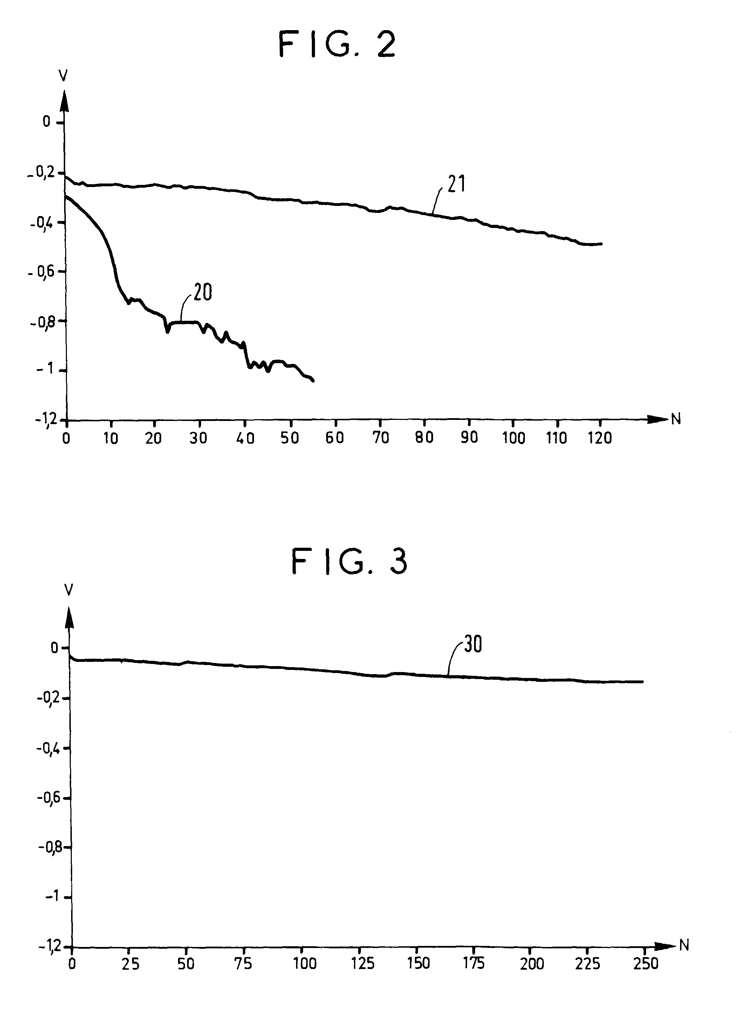

Sur les figures 2 et 3, on donne en ordonnée le potentiel V de l'électrode, en volts mesuré par rapport à Hg/HgO, en fonction du nombre de cycle N en abscisse.

### EXEMPLE 1

On réalise une électrode bifonctionnelle à air de la façon suivante. Le matériau carboné graphité utilisé est un graphite synthétique vendu sous la référence "UF 440" par la société ASBURY GRAPHITE HILLS. Ce matériau a des particules de taille moyenne comprise entre 0,5µm et 2µm et une surface spécifique de 110m²/g.

On mélange 60% en poids de graphite synthétique, 20% en poids de PTFE et 20% en poids de cobaltite Co₃O₄ et on ajuste la viscosité de la pâte avec un solvant volatil. On étale la pâte sur une face du collecteur de courant qui est une mousse de nickel de 0,8mm d'épaisseur. On applique sur l'autre face une membrane de PTFE vendue sous la marque "GORE TEX". On sèche l'électrode à température ambiante, puis on la comprime. La compression est effectuée à température ambiante sous une pression de l'ordre de 50Kg/cm² durant 2 à 5mn. La couche active de l'électrode obtenue présente des pores de diamètre moyen compris entre 1µm et 2µm.

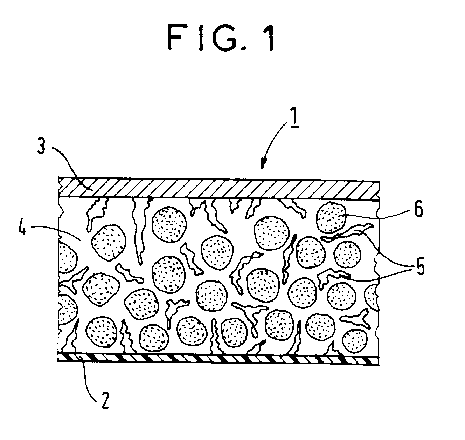

La figure 1 représente une coupe partielle de l'électrode 1 comprenant une membrane 2 perméable à l'oxygène et imperméable à l'électrolyte, un collecteur de courant 3 et une couche active 4 possédant des pores 5 et contenant des particules de graphite 6.

L'électrode A précédemment fabriquée est évaluée électrochimiquement en demi-cellule. On assemble l'électrode face à une contre-électrode de nickel métallique. L'électrolyte est de la potasse KOH 5,6N. Le test est réalisé dans les conditions suivantes :
- oxydation à 30mA/cm² pendant 3 heures, soit 90mAh/cm² par cycle,
- réduction à 30mA/cm² pendant 3 heures,

On mesure l'évolution du potentiel V de réduction en fonction du nombre de cycles N comme le montre la figure 2.

La courbe 20 de la figure 2 montre que l'activité de l'électrode A chute très rapidement, en 15 cycles environ, ce qui correspond au passage de 1,35Ah/cm² en oxydation.

### EXEMPLE 2

On réalise une électrode bifonctionnelle à air de la même façon que dans l'exemple 1, à l'exception du fait que le matériau carboné graphité utilisé est un graphite synthétique vendu sous la référence "M 450" par la société ASBURY GRAPHITE HILLS. Ce matériau a des particules de taille moyenne comprise entre 3µm et 10µm et une surface spécifique de 22m²/g.

L'électrode B obtenue est évaluée électrochimiquement comme décrit dans l'exemple 1.

La courbe 21 de la figure 2 montre que l'activité de l'électrode B, initialement supérieure à celle de l'électrode A, se maintient au même niveau dans une fourchette de ±250mV pendant au moins 120 cycles, ce qui correspond au passage de 10,8Ah/cm² en oxydation.

Cette valeur est très supérieure (d'au moins 66%) aux durées de vie obtenues dans des conditions de cyclage comparable pour des électrodes à air bifonctionnelle de l'art antérieur.

### EXEMPLE 3

L'électrode B préparée dans l'exemple 2 est évaluée électrochimiquement en demi-cellules comme dans l'exemple 1 à l'exception du fait que le test est réalisé dans les conditions suivantes :
- oxydation à 10mA/cm² pendant 3 heures, soit 30mAh/cm² par cycle,
- réduction à 10mA/cm² pendant 3 heures,

La courbe 30 de la figure 3 montre que l'activité de l'électrode B reste constante (variation de potentiel inférieure à 100mV) pendant au moins 250 cycles, ce qui correspond au passage de 7,5Ah/cm² en oxydation.

Cette valeur est très supérieure (d'au moins 15%) aux durées de vie obtenues dans des conditions de cyclage comparable pour des électrodes à air bifonctionnelle de l'art antérieur.

## Revendications

1. Electrode à air bifonctionnelle comprenant un collecteur de courant et une couche active poreuse contenant un liant et une poudre d'un matériau carboné de structure graphite, caractérisée en ce que ladite poudre est constituée de particules dont la taille moyenne est supérieure au diamètre moyen des pores de ladite couche active, ledit diamètre étant compris entre 1µm et 10µm.

2. Electrode selon la revendication 1, dans laquelle ledit matériau carboné est choisi parmi un graphite naturel, un graphite synthétique, un noir de carbone graphitisé et un noir d'acétylène.

3. Electrode selon l'une des revendications 1 et 2, dans laquelle ledit liant est le polytétrafluoroéthylène.

4. Electrode selon l'une des revendications précédentes, contenant en outre un catalyseur de réduction de l'oxygène.

5. Electrode selon l'une des revendications précédentes, contenant en outre un catalyseur d'oxydation de l'électrolyte.

6. Electrode selon l'une des revendications précédentes, dans laquelle ledit collecteur de courant est une structure conductrice tridimensionnelle choisie parmi une mousse et un feutre.

7. Electrode selon l'une des revendications 1 à 5, dans laquelle ledit collecteur de courant est une structure conductrice bidimensionnelle choisie parmi un feuillard plein, un feuillard perforé, un métal déployé, une grille et un tissu.

8. Electrode selon l'une des revendications précédentes, comprenant en outre une couche de diffusion qui est une membrane hydrophobe disposée sur ledit collecteur du côté opposé à ladite couche active.

9. Procédé de fabrication d'une électrode selon l'une des revendications précédentes, comportant les étapes suivantes :
- on mélange ledit liant, ladite matière active et un solvant volatil pour obtenir ladite pâte,
- on dépose ladite pâte sur ledit collecteur pour former une électrode,
- à température ambiante, on sèche et on comprine ladite électrode.

10. Générateur électrochimique contenant une électrode positive selon l'une des revendications 1 à 8, une électrode négative de zinc et un électrolyte alcalin.
